**Europäisches Patentamt**

**European Patent Office**

**Office européen des brevets**

(19)

(11) Veröffentlichungsnummer : **0 316 377 B1**

(12) # EUROPÄISCHE PATENTSCHRIFT

(45) Veröffentlichungstag der Patentschrift :
08.04.92 Patentblatt 92/15

(51) Int. Cl.$^5$ : **B01D 53/18, B01D 47/14**

(21) Anmeldenummer : **88904199.2**

(22) Anmeldetag : **20.05.88**

(86) Internationale Anmeldenummer :
**PCT/CH88/00097**

(87) Internationale Veröffentlichungsnummer :
**WO 88/09204 01.12.88 Gazette 88/26**

(54) **ANLAGE FÜR DIE MEHRSTUFIGE, NASSE REINIGUNG VON ABGASEN.**

(30) Priorität : **20.05.87 CH 1947/87**

(43) Veröffentlichungstag der Anmeldung :
**24.05.89 Patentblatt 89/21**

(45) Bekanntmachung des Hinweises auf die
Patenterteilung :
**08.04.92 Patentblatt 92/15**

(84) Benannte Vertragsstaaten :
**AT BE CH DE FR IT LI NL SE**

(56) Entgegenhaltungen :
**DE-A- 2 631 677**
**DE-A- 3 031 951**

(56) Entgegenhaltungen :
**DE-B- 1 010 501**
**FR-A- 2 519 410**
**US-A- 3 922 152**
**US-A- 4 095 964**

(73) Patentinhaber : **EPAL AG THUN**
**Arvenweg 38**
**CH-3604 Thun (CH)**

(72) Erfinder : **VON BURG, Heinz**
**Arvenweg 38**
**CH-3604 Thun (CH)**

(74) Vertreter : **Schweizer, Hans et al**
**Bovard AG Patentanwälte VSP**
**Optingenstrasse 16**
**CH-3000 Bern 25 (CH)**

## Beschreibung

Die Erfindung betrifft eine Anlage für die mehrstufige, nasse Reinigung von Abgasen gemäss dem Oberbegriff des Patentanspruches 1.

Die Reinigung der Abgase von festen Partikeln und von umweltbelastenden, gasförmigen Bestandteilen ist ein dringendes Anliegen der Industriegesellschaft. Diese hohen Anforderungen der Gegenwart sind, fast unabhängig von der Applikation, kaum durch einen einzigen einfachen Venturiwäscher oder einen einstufigen Sprühturm zu erfüllen. Daher wird die Kombination oder aber die Mehrstufigkeit der Anlagen durch die Aufgabenstellung selbst bedingt. Die Erfahrung zeigt, dass bei der Anordnung der Stufen solcher Anlagen vom Anlagenbauer vertikale Konzepte bevorzugt werden. Die Gründe liegen wohl in der Nutzung der Schwerkraft für die Ausscheidung von Abfall und selbsttätige Rückführung der Behandlungsmedien, die letztlich kompakten Anlagebau und gute Wirtschaftlichkeit ergeben. Vielfach sind durch örtliche Einschränkungen solche Bauweisen nicht möglich. Erwünscht wird daher eine waagerechte und ebenfalls kompakte Bauweise mit geringem Energiebedarf und niedrigen Investitionskosten. Diese Anforderungen sind mit herkömmlichen Anlagen nicht zu erfüllen, da sie durch die Aufstellung der Apparate in der Ebene zu meanderförmiger Durchströmung der Anlagestufen führen. Solche Anlagen sind platzaufwendig und wegen den ausgedehnten Durchlauflängen weder in der Gestaltung noch im Betrieb rationell. Eine weitere Anforderung wird durch einfache Wartung der Anlagen gestellt. Solche Wartungsarbeit ist das Wechseln des Inhaltes von Füllkörperkolonnen. Bei Anlagen des Standes der Technik geschieht diese Arbeit durch Bedienungsöffnungen wie Mann- und Handlöcher. Da ein nicht unwesentlicher Teil der ausgeschiedenen Abfälle an der Oberfläche der Füllkörper abgelagert wird, wachsen die Füllkörper im Laufe des Betriebes zu. Die Erneuerung der Füllkörper ist daher für die Aufrechterhaltung der Funktion einer Anlage von grundlegender Bedeutung. Je schneller und einfacher diese Arbeiten erledigt werden können, umso besser wird die Verfügbarkeit der Anlage.

In der DE-1 010 501 ist eine Füllkörperkolonne offenbart. Diese Anlage ist für die mehrstufige, nasse Reinigung von Abgasen bestimmt. Sie umfasst mehrere waagerecht angeordnete Stufen mit je einer Füllkörperschichtkammer. Waschflüssigkeit wird mittels Schöpfbechern, die zwischen den einzelnen Füllkörperschichtkammern angeordnet und von einer gemeinsamen, alle die Füllkörperschichtkammern durchdringenden Welle angetrieben sind, auf die Oberseite jeder der Kammern gefördert. Alle Füllkörperschichtkammern weisen je stirnseitige Oeffnungen auf, welche das Durchströmen des zu reinigenden Gases quer zur Rieselrichtung der Waschflüssigkeit ermöglichen. Die offenbarte Anlage wird vorzugsweise in der Hochvakuumtechnik eingesetzt, wo die zu reinigenden Dämpfe oder Gase lediglich in geringen Dichten auftreten. In allen übrigen Fällen, insbesondere zum Reinigen von Abgasen mit vielen Komponenten, ist diese Anlage, was die Güte der Reinigung anbelangt, weniger geeignet.

In der US-3 922 152 ist ein Abgasreinigungsfilter offenbart, bei dem zwei Filterstufen nebeneinander angeordnet sind. Jede der Filterstufen umfasst mehrere übereinander angeordnete Kammern, die mit porösem Filtermaterial wie Sandstein und einer Waschlösung gefüllt sind. Das Abgas, durch eine Art Turbine pro Filterstufe beschleunigt, wird von unten nach oben durch die einzelnen Kammern jeder der Filterstufen geleitet. Es ist eine Vorrichtung vorgesehen, mit der zum Reinigen des porösen Filtermaterials eine Flüssigkeit unter Druck an die einzelnen Kammern zugeführt werden kann. Der offenbarte Filter ist nur für gezielte Anwendungen, beispielsweise in Motorfahrzeugen einsetzbar. Er ist auch geeignet zum Filtern von Schachtgasen (Bergbau) oder zum Klären von Wasser. Abgase mit vielen Schadkomponenten können auch damit nicht optimal gereinigt werden.

Bei beiden hier gewürdigten Reinigungseinrichtungen wirkt sich zudem nachteilig aus, dass ein einfaches Wechseln der Füllkörper bzw. des porösen Filtermaterials nicht vorgesehen ist.

Ziel der Erfindung ist es, eine Anlage für die mehrstufige, nasse Reinigung von Abgasen vorzuschlagen, die trotz bescheidener Bauhöhe eine kompakte Bauart ermöglicht und sowohl in Sachen Herstellung wie in Sachen Wartung, Verfügbarkeit und Betriebskosten als rationale Lösung gelten kann. Dabei ist es selbstverständlich, dass diese Vorzüge der Erfindung keinen Nachteil in der Güte der Reinigung zur Folge haben dürfen.

Eine Anlage für die mehrstufige, nasse Reinigung von Abgasen, welche allen diesen Anforderungen genügt, ist erfindungsgemäss gekennzeichnet durch die Merkmale des kennzeichnenden Teiles des Patentanspruches 1.

Ein bevorzugtes Ausführungsbeispiel der erfindungsgemässen Anlage für die nasse Reinigung von Abgasen ist dadurch gekennzeichnet, dass die Anlagenstufen in einem gemeinsamen zylindrischen Gehäuse angeordnet sind, das sich entlang seines Aequators teilen und somit auch öffnen lässt. Die Erfindung umfasst auch Laufräder, die nebst ihrer anlagenstufenweisen Anordnung frei, d.h. ohne gesondertes, meistens spiralförmiges Gehäuse verwendet werden und somit in das gemeinsame Gehäuse der Anlage integriert sind. Dabei kann der Drall der Strömung durch einen stehenden, um das Laufrad angeordneten Kranz von Leitschaufeln kompensiert und somit der Wirkungsgrad der Gasförderung gesteigert werden.

Nachfolgend wird ein Ausführungsbeispiel der erfindungsgemässen Abgasreinigungsanlage anhand von Figuren näher erläutert und die Funktion sowie der Aufbau der Anlage werden erklärt. Die Figuren zeigen

**Fig. 1** einen schematischen Längsschnitt der Anlage,

**Fig. 2** einen Querschnitt der Anlage entlang des Schnittes 1 - 2 der Fig. 1,

**Fig. 3** den Längsschnitt eines besonderen Ausführungsbeispieles einer Anlagestufe, und

**Fig. 4** das Detail Wellendichtung und Wellenkanal.

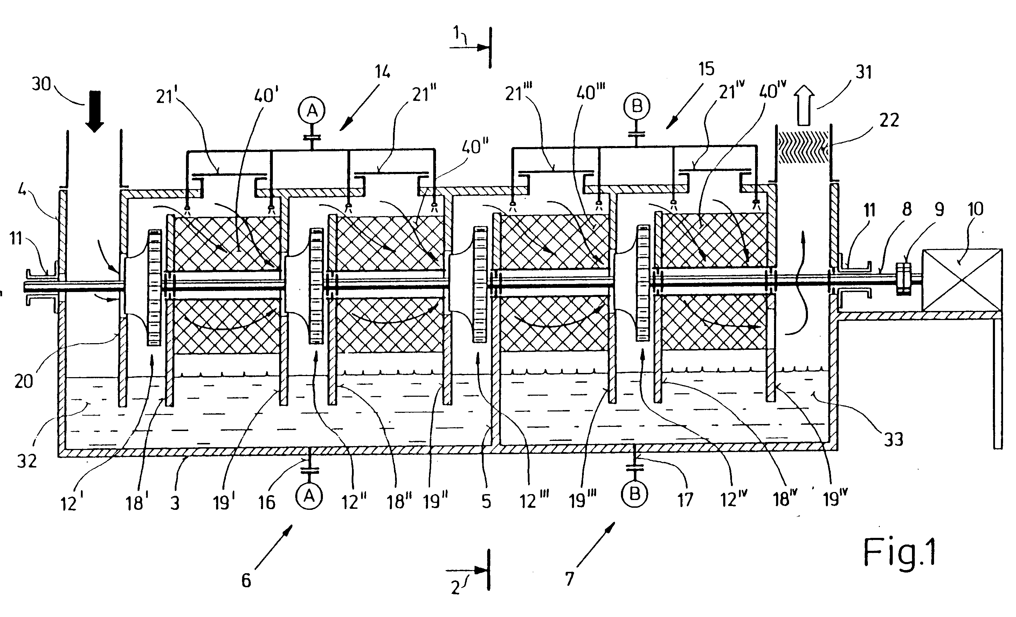

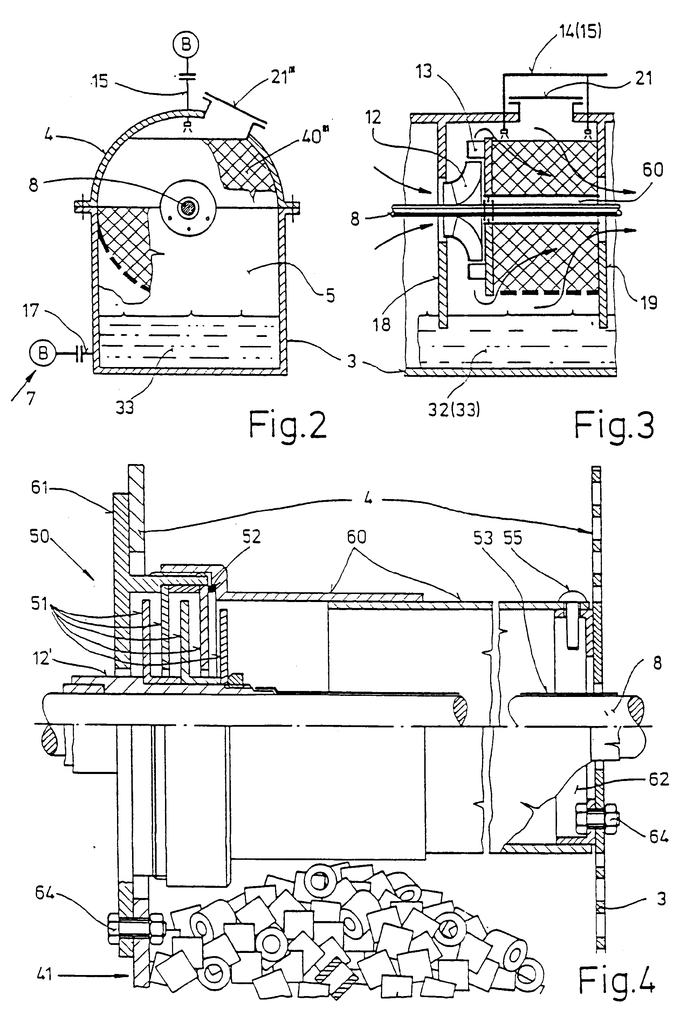

Das ungereinigte Abgas 30 gelangt, angesogen von den Laufrädern 12' bis 12'v, in den von einer Wanne 3 und Haube 4 umschlossenen Raum der Reinigungsanlage. Diese ist durch die Füllkörperkolonnen 40' bis 40'v in vier Anlagestufen und wegen der Unterteilung der Wanne 3 durch das Schott 5 sowie den Waschflüssigkeiten 32 und 33 in zwei chemische Stufen 6 und 7 zum Durchführen je einer chemischen Behandlung unterteilt. Der Strömungswiderstand der Füllkörperkolonnen 40 bis 40'v wird durch die zugeordneten Laufräder 12' bis 12'v ausgeglichen. Dabei werden die Laufräder 12' bis 12'v durch eine gemeinsame Transmissionswelle 8 getrieben, die an ihren beiden Enden durch die Lager 11 gelagert und über eine Kupplung 9 von einem zentralen Antriebsmotor 10 angetrieben wird. Dabei gelangt das Abgas durch die zwischen der Haube 4 und der vorderen Trennwand 18' gebildete Oeffnung, wie in Fig. 1 gezeigt, in die Füllkörperkolonne 40' der ersten Anlagestufe. Gemäss den in der Fig. 1 angegebenen Pfeilen werden die weiteren Füllkörperkolonnen (40' - 40'v) vom Abgas durchströmt. Die Fig. 3 zeigt die Möglichkeit einer dank einer verkürzten Vorderwand von zwei Seiten beaufschlagten Füllkörperkolonne. Hier wird der durch das Laufrad 12 erzeugte Drall des Abgases durch den stehenden Schaufelkranz 13 aufgehoben. Die Durchführung der Transmissionswelle 8 durch eine der Füllkörperkolonnen zeigt Fig. 4. Dort sieht man, wie eine aus Scheiben 51 aufgebaute Labyrinthdichtung 50 und der teleskopartig ausgebildete Wellenkanal 60 ausgeführt werden können. Diese Ausführungsart ermöglicht einen relativ einfachen Zusammenbau und zugleich die Dilatation von Werkstoffen mit sehr unterschiedlichem Wärmeausdehnungskoeffizient. Dabei sind die Scheiben 71, 72 an den in der Wanne 3 verbleibenden Teil der vorderen und hinteren Trennwand 18, 19 resp. am Schott 5 festgeschraubt, wenn die Haube 4 von der Wanne 3 zwecks Wechseln der Füllkörperkolonnen 40 enternt wird (vgl. Fig. 2). Somit dienen die anlagenstufenweise angeordneten Mannlöcher 21' bis 21'v für das Fertigfüllen der Festkörperkolonnen 40' bis 40'v, denn für die Entleerung derselben kann die Haube 4 entfernt werden. Es versteht sich, dass bei diesem Vorgang die Brausenkollektoren 14 und 15 von den Zuleitungen A und B zu entkuppeln sind. Die Förderung der Waschflüssigkeiten kann durch nichtgezeigte Pumpen oder durch ebenfalls nicht gezeigte örtliche Erweiterungen an den Laufrädern erzielt werden, die bis in die Waschflüssigkeit reichen und dadurch die Befeuchtung des Gasstromes ermöglichen.

## Patentansprüche

1. Anlage für die mehrstufige, nasse Reinigung von Abgasen, mit einer Anzahl waagrecht angeordneter Anlagestufen mit je einer Füllkörperkolonne mit im wesentlichen stirnseitigen Oeffnungen für den Gaseintritt sowie einer, alle Anlagestufen durchdringende Transmissionswelle, dadurch gekennzeichnet, dass auf der Transmissionswelle (8) mehrere Laufräder (12) zum Zuführen von kinetischer Energie an den Abgasstrom angeordnet sind, dass jeder der Füllkörperkolonnen im Bereiche der genannten Oeffnungen je eines der Laufräder (12) vorgelagert ist und dass mindestens eine chemische Stufe (6, 7) zum Durchführen einer chemischen Behandlung vorhanden ist, wobei dieser chemischen Stufe wenigstens eine Füllkörperkolonne (40) sowie ein Brausekollektor (14, 15) zum Besprühen der Füllkörperkolonne (40) mit einer Waschflüssigkeit (32, 33) zugeordnet ist.

2. Anlage nach Anspruch 1, dadurch gekennzeichnet, dass ein gemeinsames, zumindest teilweise zylindrisches Gehäuse, das eine Wanne (3) und eine Haube (4) umfasst, vorhanden ist, wobei die Haube zum Entleeren und/oder Wechseln der Füllkörperkolonnen (40) abhebbar ist.

3. Anlage nach Anspruch 1 oder 2, dadurch gekennzeichnet, dass um mindestens eines der Laufräder (12) ein stehender Kranz von Leitschaufeln (13) angeordnet ist.

4. Anlage nach einem der Ansprüche 1 bis 3, dadurch gekennzeichnet, dass die Transmissionswelle (8) eine Hohlwelle ist.

5. Anlage nach einem der Ansprüche 1 bis 4, dadurch gekennzeichnet, dass die Durchführung der Transmissionswelle (8) durch eine der Füllkörperkolonnen (40) an dem zugeordneten Laufrad (12) zugewandten Seite mit einer Labyrinthdichtung (50) abgedichtet ist.

6. Anlage nach einem der Ansprüche 1 bis 5, dadurch gekennzeichnet, dass am Laufrad (12) örtliche Erweiterungen, die bis in die Waschflüssigkeit (32, 33) hineinreichen, zum Befeuchten des Gasstromes durch die Waschflüssigkeit, vorhanden sind.

7. Anlage nach einem der Ansprüche 1 bis 6, dadurch gekennzeichnet, dass der Reihe von Füllkörperkolonnen (40) ein gemeinsamer Gaskühler vorgeschaltet und/oder ein gemeinsamer Tropfenfänger (22) nachgeschaltet ist.

**Claims**

1. Multiple-stage installation for scrubbing exhaust gases, with a plurality of horizontally disposed stages each with a packed column with essentially frontal openings for the gas inlet and one transmission shaft passing through all the stages, characterized in that disposed on the transmission shaft (8) there are several wheels (12) for imparting kinetic energy to the stream of exhaust gas, in that in the area of said openings one of each of the wheels (12) is disposed in front of each of the packed columns and in that there is at least one chemical stage (6, 7) for carrying out a chemical treatment, this chemical stage being associated with at least one packed column (40) and one spray collector (14, 15) for spraying the packed column (40) with a cleaning liquid (32, 33).

2. The installation of claim 1, characterized in that there is a common, at least partially cylindrical housing comprising a tank (3) and a cover (4), the cover being removable for emptying and/or changing the packed columns (40).

3. The installation of claim 1 or 2, characterized in that around at least one of the wheels (12) is disposed a standing ring of baffles (13).

4. The installation of one of claims 1 to 3, characterized in that the transmission shaft (8) is a hollow shaft.

5. The installation of one of claims 1 to 4, characterized in that the channel for the transmission shaft (8) through one of the packed columns (40) is sealed with a labyrinth seal (50) on the side nearest the associated wheel (12).

6. The installation of one of claims 1 to 5, characterized in that on the wheel (12) there are local enlargements which extend into the cleaning liquid (32, 33) to wet the stream of gas with the cleaning liquid.

7. The installation of one of claims 1 to 6, characterized in that arranged in series in front of the row of packed columns (40) there is a common gas cooler and/or arranged in series behind, a common drip catcher (22).

**Revendications**

1. Installation pour le nettoyage humide à plusieurs étages de gaz d'échappement comprenant une pluralité d'étages d'installation disposés horizontalement, comprenant chacun une colonne à corps de remplissage, avec des ouvertures, essentiellement sur le côté frontal, pour l'entrée des gaz ainsi que d'un axe de transmission traversant tous les étages d'installation, caractérisée en ce qu'une pluralité de roues à aubes (12) pour fournir de l'énergie cinétique au courant de gaz d'échappement sont disposées sur l'axe de transmission (8), en ce que chacune des colonnes à corps de remplissage comprend une des roues à aubes (12) dans la région desdites ouvertures et en ce qu'au moins un étage chimique (6,7) est prévu pour conduire un traitement chimique, au moins une colonne à corps de remplissage (40) ainsi qu'un collecteur de douche (14,15) pour asperger la colonne à corps de remplissage (40) avec un liquide de nettoyage (32,33) étant disposés dans cet étage chimique.

2. Installation selon la revendication 1, caractérisée en ce qu'elle comprend un bâti commun, au moins partiellement cylindrique, comprenant une cuve (3) et un capot (4), le capot étant relevable pour retirer et/ou échanger les colonnes à corps de remplissage (40).

3. Installation selon l'une des revendications 1 ou 2, caractérisée en ce qu'une couronne fixe d'une roue à aubes fixes (13) est disposée sur au moins une roue à aubes (12).

4. Installation selon l'une des revendications 1 à 3, caractérisée en ce que l'axe de transmission (8) est un arbre creux.

5. Installation selon l'une des revendications 1 à 4, caractérisée en ce que le passage de l'axe de transmission (8) à travers une des colonnes à corps de remplissage (40), du côté faisant face à une roue à aube (12), est étanchéifié avec une étanchéité à labyrinthe (50).

6. Installation selon l'une des revendications 1 à 5, caractérisée en ce que des extensions localisées sont disposées sur la roue à aubes (12), plongeant jusque dans le liquide de nettoyage (32,33), pour humidifier le flux de gaz par le liquide de nettoyage.

7. Installation selon l'une des revendications 1 à 6, caractérisée en ce qu'un refroidisseur de gaz commun est placé en amont, et/ou un séparateur de gouttes (22) commun est placé en aval de la rangée des colonnes à corps de remplissage (40)

4

Fig.1

Fig.2

Fig.3

Fig.4